# EUROPEAN PATENT SPECIFICATION

(11) **EP 0 435 432 B1**
(45) Date of publication and mention of the grant of the patent: **14.08.1996**
(21) Application number: 90311394.2
(22) Date of filing: 17.10.1990
(51) Int. Cl.: G01N 11/00, G01N 33/04

(54) **Method and apparatus for examining and determining the viscosity of a liquid in a container**
Verfahren und Vorrichtung zur Prüfung und Bestimmung der Viskosität einer Flüssigkeit in einem Behälter
Méthode et dispositif pour examiner et déterminer la viscosité d'un liquide dans un récipient

(30) Priority: 26.12.1989 JP 336908/89
(43) Date of publication of application: 03.07.1991
(73) Proprietor: MEIJI MILK PRODUCTS COMPANY LIMITED, Tokyo 104 (JP)
(72) Inventor: Chiba, Yuho, c/o Meiji Milk Products, Co.,Ltd., Higashimurayama-shi, Tokyo 189 (JP); Tomita, Takao, c/o Meiji Milk Products, Co.,Ltd., Higashimurayama-shi, Tokyo 189 (JP)
(74) Representative: Godwin, Edgar James

(56) References cited:
- EP-A- 0 269 815
- GB-A- 2 192 463
- GB-A- 2 192 987
- Soviet Inventions Illustrated, Week 8843, 07-12-88, Derwent, London, GB, No. 88-306354/43 & SU-A-1 390 533

## Description

This invention relates to a method and an apparatus for examining and determining the viscosity of a liquid in a container to find out whether there is any quality change in the liquid sealed in the container without destroying or opening said container.

Conventionally, it has not been made possible to find out whether a liquid-form foodstuff sealed in a container has its viscosity changed by germs or bacteria-caused deficiency, without opening the container.

It has been known to determine such a viscosity change in liquids other than foodstuffs from a torque difference sensed and detected by shaking their containers.

Among the thus-known conventional methods, the former, requiring containers to be opened, is not applicable to such objects as commercial products and goods which can not be opened.

Determining a viscosity change from a torque difference as employed in the latter method, meanwhile, is not practically effective when such a torque difference is small.

GB-A-2 192 463 is related to non-destructive rheological testing. A closed carton is secured to a turntable driven by a motor from an initial state of rest. The change of angular velocity of the turntable is measured by a tachogenerator.

SU-A-1 390 533 describes a method of determining the viscosity of a liquid, in which an open container is rotated to a given angular velocity, at which the liquid surface takes up a paraboloid form, whereupon the rotation is stopped abruptly. The time taken for the liquid surface to return to a given height is detected using a time meter and a level sensor having a probe which is inserted through the open upper end of the container. The results are processed to calculate parameters of the liquid for analysing its composition and properties such as viscosity.

The present invention provides a method and apparatus for examining light-permeable closed containers partially filled with a liquid, for determining whether there has been any unacceptable alteration of the viscosity of the liquid, as defined in the independent claims.

The invention will be described further, by way of example, with reference to the accompanying drawings, in which:
Fig. 1 is a front view of an apparatus according to the present invention, partially shown in block diagram;
Fig. 2 is a partial plan view of the same; and
Fig. 3 is a graph presenting results of a viscosity test according to the present invention.

More particularly, in one aspect the examining method involves measuring a lapse of time from the application of centrifugal force to the detection of a predetermined level of an output signal, e.g. a voltage, of an analog-output-type photoelectric sensor. In another aspect the method involves measuring the output of the said sensor upon a predetermined lapse of time from the application of the centrifugal force. The centrifugal force may be caused and applied to the container by rotating the container at a speed of 300 to 1,500 rpm.

Further, a preferred apparatus for examining and determining the viscosity of a liquid in a container comprises a container holder linked to a rotation force input, a sensor holding plate shiftable in its vertical direction provided around said container holder, a level-detection photoelectric tube sensor and an analog output type photoelectric sensor both set on said sensor holding plate, and a date processing device connected through its input to the output of said analog output type photoelectric sensor.The level-detection photoelectric tube sensor is provided on the sensor holding plate on which the analog output type photoelectric sensor is also provided, and shifts in association with the sensor holding plate to adjust the level of the analog output type photoelectric sensor according to the level of the surface of the liquid to be examined at every time before the rotation of the container holder is started.

When a centrifugal force is applied to a liquid sealed in a container to be examined, by rotating the container about a vertical axis, the surface of the liquid takes on a different form, being a recessed arcuate form if the said axis is the vertical axis of the containers. This change in the liquid surface form is detected by the analog output type photoelectric sensor, since an increase in the thickness of the liquid in a given horizontal cross-section causes, for instance, a voltage drop in the sensor output. A lapse of time measured from the application of a centrifugal force to the detection of a predetermined voltage drop, accordingly, changes in correspondence to a viscosity change in the liquid. Likewise, the output voltage level of the analog output type photoelectric sensor measured a constant time after the application of a centrifugal force changes in correspondence to a liquid viscosity change.

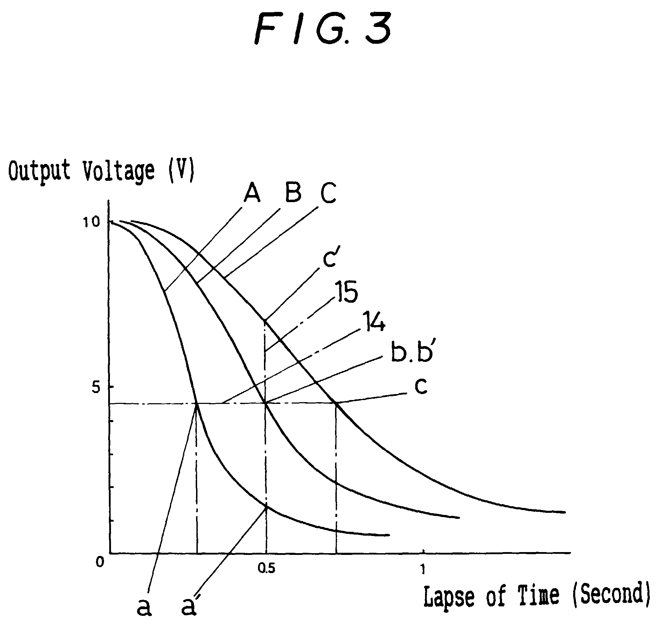

In their viscosity changes resulting from bacteria-caused deficiency, foodstuffs are divided into two opposite groups: one shows an increase and the other a decrease. However, the same device can be used to examine and determine the viscosity of a particular liquid-form foodstuff irrespective of the type fluctuation of its viscosity once standard data based on its normal viscosity level is inputted. Viscosity changes in the same liquid foodstuff resulting from bacteria-caused deficiency show a particular relationship between the output voltage from the analog output type photoelectric sensor and a lapse of time from the application of centrifugal force to the liquid foodstuff sealed in a container such as the relationship which is represented in Fig. 3 in accordance with the respective levels of viscosity.

The graph presented as Fig. 3 shows the relationship between the output voltage of the photoelectric sensor and the lapse of time from the application of centrifugal force in the case of the same liquid foodstuff varying in deficiency-caused viscosity. With the vertical axis showing output voltage and the horizontal axis lapse of time, A and C represent high and low levels of viscosity, respectively, and B a medium level therebetween.

Therefore, it can be easily detected whether there is any abnormal viscosity in a liquid foodstuff by using either of the following methods. The one, in this case the output voltage of the photoelectric sensor is used as a criterion; the lapse of time from the application of centrifugal force to a normal liquid-form foodstuff sealed in a container to the detection of a predetermined level of an output voltage of said sensor is measured; and said measured lapse of time is retained as a standard data. At the time when the similar liquid-form foodstuffs sealed in other containers are to be examined, the lapse of time from the application of centrifugal force to the examined liquid-form foodstuff sealed in other container to the detection of a predetermined level of an output voltage of said sensor, which is identical with the predetermined level of an output voltage of said sensor used for measuring the before-mentioned standard data, is measured by the same manner. This measured lapse of time is then compared against the before-mentioned standard data for detecting whether there is any abnormal viscosity in said examined liquid-form foodstuff. The other, in this case the lapse of time from the application of the centrifugal force to the liquid-form foodstuff sealed in a container is used as a criterion; the output voltage of the analog output type photoelectric sensor upon a predetermined lapse of time from the application of centrifugal force to a normal liquid-form foodstuff sealed in a container is measured; and said measured output voltage is retained as a standard data. At the time when the similar liquid-form foodstuffs sealed in other containers are to be examined, the output voltage of the sensor upon a predetermined lapse of time from the application of centrifugal force, which is identical with the lapse of time used for measuring the before-mentioned standard data, is measured by the same manner. This measured output voltage of the sensor is then compared against the before-mentioned standard data for detecting whether there is any abnormal viscosity in said examined liquid-form foodstuff.

The above-described predetermined voltage based on an output voltage as its criterion is a value which most conspicuously shows a difference in the graph presenting relationship between output voltage levels of the analog output type photoelectric sensor and a lapse of time after the application of a centrifugal force, and obtained by the tests with respect to the liquid-form foodstuffs which are examined and compared about their viscosity changes. Generally, an input voltage for an analog/ digital converter IC is set within a range of DC± 10 V. The range of an analog/ digital converter IC input voltage in the embodiment of the present invention was from DC 0 V to 10 V and its maximum value in the graph presented as Fig. 3 is presented as 10 V.

The above-described predetermined lapse of time used as a criterion is a time from the application of a centrifugal force to a liquid-form foodstuff to the time when the liquid-form foodstuff changes in its surface form, which varies, depending on its viscosity difference. Normally, such a change in the surface of a liquid-form foodstuff completes within a few seconds from the start or suspension of its rotation.

Though depending on the viscosity of liquid-form foodstuffs, to be examined, a centrifugal force which is too low may not be enough to, when the rotation of the container with foodstuff to be examined is slow at a speed of less than 300 rpm, cause the liquid-form foodstuff to be pressed to and rise on the inner wall portion of its container. On the other hand, when the rotation is faster than 1,500 rpm conversely, the centrifugal force may cause the liquid-form foodstuff to to rise on the inner wall portion of its container too quickly and form a rough surface, making the resultant data unreliable. It is desirable, therefore, to apply the centrifugal force to the container and its contents by rotating the container at a speed of 300 to 1,500 rpm.

As described in the above, the present invention has advantage of making it possible to examine a liquid sealed in a container to determine its viscosity change without destroying the container thereof. The invention is thus effective to examine a liquid-form foodstuff sealed in a container to determine whether there is any viscosity change in the foodstuff due to bacteria-caused deficiency, without destroying the container.

If an output from a data processing device is connected to an input of a control system for a container-conveying device, inferior quality goods such as liquid foodstuff having abnormal viscosity as a result of bacteria-caused deficiency sealed in a container can be removed or discarded automatically.

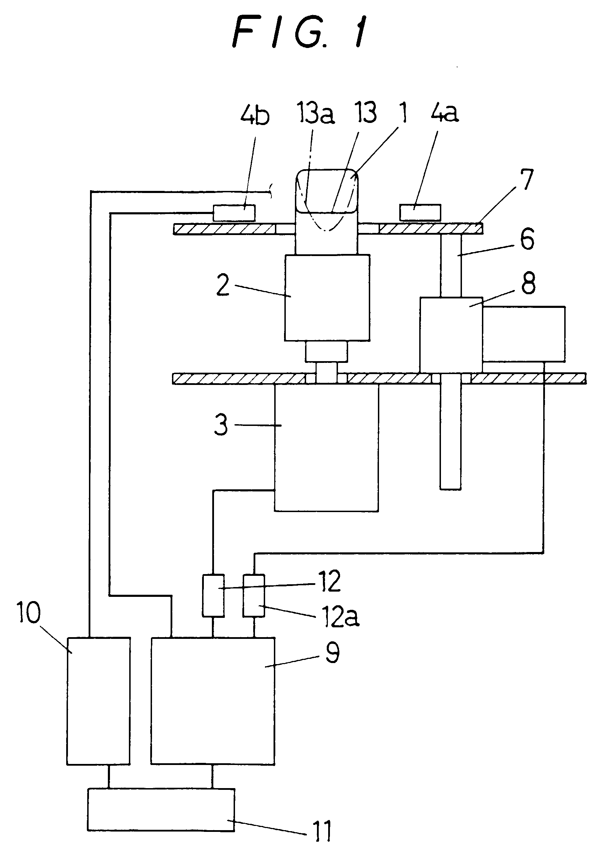

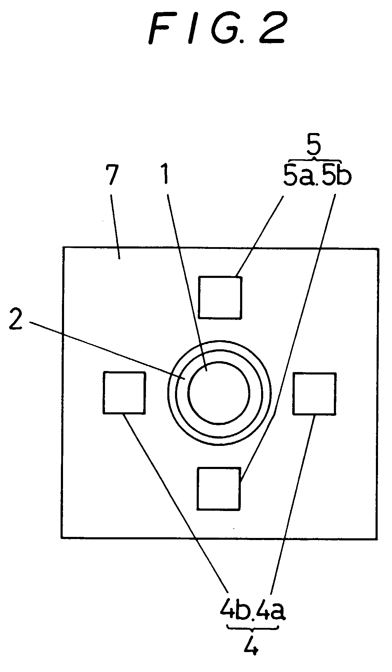

A preferred embodiment of the apparatus of the present invention is shown in Figs. 1 and 2.

A container holder 2 is linked with the shaft of a motor 3 and holds a light-permeable container 1. A sensor mounting plate 7 horizontally held by a vertical support rod 6 is provided outside the holder 2. The support rod 6 is linked with the output of a motor 8 for driving it in its vertical direction.

Sensing means positioned on the plate 7 comprises a level-detection photoelectric tube sensor 4 and an analog output type photoelectric sensor 5, arranged on the plate 7 so that their axes are mutually orthogonal, as shown in Figure 2. The electrical output from a light reception device 4b of the level-detection sensor 4 is connected to a DIO board 9 and linked with a circuit controlling the motor 8. The electrical output of a light reception device 5b of the photoelectric sensor 5 is connected to an analog/digital converter board 10, and both the DIO board 9 and the A/Dconverter board 10 are connected to a personal computer 11. Designated by numerals 12 and 12a are relays. Thus constructed, the personal computer 11 through its processing unit not only can control the motors 3 and 8 but also can execute the disposal and removal of deficient containers containing a liquid foodstuff having abnormal viscosity by connecting the output of the personal computer 11 to a transfer line for such goods and products.

With the above structure, the motor 8, when rotated, shifts the support rod 6 up and down to adjust the level of the photoelectric sensor 4 to the level of the liquid surface 13 in the container 1. When the motor 3 is started, the holder 2 is rotated to rotate the container 1, and the liquid surface in the container 1 is formed into a dished or paraboloid shape 13a under the influence of centrifugal force. Light emitted from a light projector 5a of the photoelectric sensor 5 (which is mounted higher than the level sensor 4) passes through the liquid and reaches the light reception device 5b. The amount of light received at the. light reception device 5b is measured by the output voltage which is converted by the A/D converter board 10 to a digital signal. The lapse of time required for the output voltage of the photoelectric sensor 5 to reach a predetermined level after the start of the rotation of the container 1 and the output voltage of the sensor 5 after a predetermined lapse of time from the start of the rotation of container 1 are recorded by the personal computer 11.

The rising speed of the liquid surface, depending on the viscosity of a liquid to be measured, is represented by curves A, B, and C in Fig. 3. The curve A represents high viscosity, C represents low viscosity, and B represents medium-level viscosity therebetween.

In Fig. 3, a horizontal line 14 representing an output voltage of 4.5 V intersects the curves A, B, and C at points a, b, and c respectively: the lapse of time required for the output voltage to reach 4.5 V after the start of the container rotation is, respectively, 0.3 seconds, 0.5 seconds, and 0.7 seconds with respect to the curves A, B, and C. A vertical line 15 representing the lapse of time of 0.5 seconds after the start of the container rotation intersects the curves A, B, and C at points a', b', and c'; the output voltage 0.5 seconds after the start of the container rotation is for curves A, B, and C, 1.2V, 4.5 V, and 6.9 V, respectively. Thus, it is clear that the output voltage and the lapse of time have a direct relationship. Accordingly, it is possible to determine the viscosity of the liquid in the container either by measuring the lapse of time from the start of the container rotation to the time when the output voltage of the analog output type photoelectric sensor reaches a predetermined level from its base level or by measuring the output voltage level of the sensor upon a predetermined lapse of time after the start of the container rotation.

### EXAMPLE 1

The sample liquid consisted of 50 cc of processed milk filled in a light-permeable polyethylene bottle 5 cm diameter, 7 cm in height, and 0.7 mm in thickness.

In the liquid viscosity examination carried out in accordance with the invention, the fresh processed milk immediately after its production was compared with the same implanted with unspecified strains of bacteria and left in a room-temperature atmosphere for four to five days and for two weeks. Presented here below are viscosity data of samples which were obtained from the before mentioned three cases and were used for this liquid viscosity examination.
Viscosity: 1.4 cP (viscosity lowered)
Viscosity: 1.9 cP (viscosity normal)
Viscosity: 2.4 cP (viscosity raised)
Viscosity: 3.5 cp (viscosity raised)
The measured level of viscosity of fresh processed milk in a normal state immediately after its production was 1.9 cP.

In the viscosity examination, each sample was filled in the container 1, placed in the holder 2, and rotated at a speed of 500 rpm. The lapse of time was measured from the start of rotation of the container holder 2 to the state at which the output voltage from the analog output type photoelectric sensor 5 reached 5 V. Also the output voltage of the photoelectric sensor 5 was measured 1.5 seconds after the start of the container rotation.

The time required for the output voltage of the photoelectric sensor 5 to reach a level of 5 V and the voltage output of the sensor 1.5 seconds after the start of the container rotation both turned out to be shorter and lower when the viscosity is higher than the normal viscosity, showing that a liquid-form foodstuff with its viscosity changed as a result of bacteria-caused deficiency can be detected.

The measurement of viscosity, the measurement of a lapse of time from the start of the container rotation to the time when the output voltage from the sensor reached 5 V, and the measurement of a sensor output voltage 1.5 seconds after the start of the container rotation were carried out at a temperature of 20°C.

The lapse of time from the start of the container rotation to the time when the output voltage from the analog output type photoelectric sensor 5 reaches 5 V is as shown in Table 1.

**Table 1:**

| Viscosity (cP) | Lapse of Time (Second) |
|---|---|
| 1.4 | 2.21 |
| 1.9 | 1.73 |
| 2.4 | 1.58 |
| 3.5 | 1.44 |

The output voltage from the analog output type photoelectric sensor 5 upon 1.5 seconds after the container rotation is as shown in Table 2.

**Table 2:**

| Viscosity (cP) | Output Voltage (V) |
|---|---|
| 1.4 | 6.8 |
| 1.9 | 5.8 |
| 2.4 | 5.3 |
| 3.5 | 4.7 |

It was proved through the above measurement that viscosity can be determined to a difference of viscosity of 1 cP. In other words, viscosity can be measured in a unit of 1 cP to determine whether there is any abnormal viscosity in a liquid-form foodstuff.

### EXAMPLE 2

In this example , 50 cc of condensed milk was filled in a permeable polyethylene bottle having 5 cm diameter, 7 cm in height and 0. 7 mm in thickness.

In the liquid viscosity examination carried out in accordance with the invention, the fresh condensed milk immediately after its production was compared with the same planted with unspecified strains of bacteria left in a room-temperature atmosphere for four to five days and for two weeks. Presented hereinbelow are viscosity data of samples which were obtained from the before mentioned three cases and were used for this liquid viscosity examination.
Viscosity: 4 cP (viscosity lowered)
Viscosity: 5 cP (viscosity normal)
Viscosity: 9.9 cP (viscosity raised)
Viscosity: 20 cp (viscosity raised)
The measured level of viscosity of fresh condensed milk in a normal state immediately after its production was 5 cP.

In the viscosity examination, each sample was filled in the container 1, placed in the holder 2, and rotated at a speed of 500 rpm. Then lapse of time was measured from the start of the rotation of the container holder 2 to the state at which the output voltage from the analog output type photoelectric sensor 5 reached 5 V. Also the output voltage of the photoelectric sensor 5 was measured 1.3 seconds after the start of the container rotation.

The time required for the output voltage of the photoelectric sensor 5 to reach a level of 5 V and the voltage of the sensor 1.3 seconds after the start of the container rotation both turned out to be shorter and lower when the viscosity is higher than the viscosity stays unchanged, proving that a liquid-form foodstuff with its viscosity changed as a result of bacteria-caused deficiency can be detected.

The measurement of viscosity, the measurement of a lapse of time from the start of the container rotation to the time when the output voltage from the sensor reached 5 V, and the measurement of a sensor output voltage upon 1.3 seconds after the start of the container rotation were carried out at a temperature of 20°C

The lapse of time from the start of the container rotation to the time when the output voltage of the analog output type photoelectric sensor 5 reached 5 V is as shown in Table 3.

**Table 3:**

| Viscosity (cP) | Lapse of Time (Second) |
|---|---|
| 4.0 | 1.33 |
| 5.0 | 1.25 |
| 9.9 | 1.13 |
| 20.0 | 1.06 |

The output voltage from the analog output type photoelectric sensor 5 upon 1.3 seconds after the start of the container rotation is as shown in Table 4.

**Table 4:**

| Viscosity (cP) | Output Voltage (V) |
|---|---|
| 4.0 | 5.0 |
| 5.0 | 4.5 |
| 9.9 | 3.8 |
| 20.0 | 3.0 |

It was proved through the above measurement that viscosity can be determined to a difference of 1 cP. In other words, viscosity can be measured in a unit of 1 cP to determine whether there is any abnormal viscosity in a liquid-form foodstuff.

## Claims

1. A method of examining light-permeable closed containers (1) partially filled with a liquid, for determining whether there has been any unacceptable alteration of the viscosity of the liquid, the method comprising the steps of:
(a) setting a first container (1) on a rotatable container holder (2), the container (1) being partially filled with a liquid in its normal state;
(b) adjusting the level of an analog-output-type photoelectric sensor (5) relative to the liquid surface level (13) by detecting the surface level (13) of the liquid by means of a level detection photoelectric sensor (4);
(c) rotating the container holder (2) about a vertical axis and thereby applying a centrifugal force to the liquid in the container (1) so as to cause the surface form of the liquid to change to a dished shape (13a);
(d) recording a lapse of time from the beginning of the rotation of the container holder (2) and the corresponding magnitude of the output of the analog-output-type photoelectric sensor (5), during the change of the surface form of the liquid, as respective reference values:
(e) repeating the steps (a) to (d) for further individual containers (1) partially filled with the liquid:
(f) determining whether there is a difference between the actual value of the magnitude of the said output and the reference value of the magnitude, at the reference lapse of time, or a difference between the actual value of the lapse of time and the reference value of the lapse of time, when the reference value of the magnitude of the said output is reached: and
(g) determining from the said difference(s), if any, whether there has been any unacceptable alteration of the viscosity of the liquid content of the said further containers.

2. A method as claimed in claim 1, in which the container holder (2) is rotated at a speed of 300 to 1500 rev/min.

3. Apparatus for performing a method according to claim 1, the apparatus comprising:
(a) a rotatable container holder (2);
(b) means (3) for rotating the container holder (2) about a vertical axis;
(c) a sensor mounting (7) which is vertically movable relative to the container holder (2) and which extends around the container holder (2);
(d) a level detection photoelectric sensor (4) for detecting the surface level (13) of the liquid in a container (1) when placed on the container holder (2), the sensor (4) being mounted on the sensor mounting (7);
(e) means (8,9) for adjusting the level of the sensor mounting (7) relative to the said surface level (13) as a function of the output of the level detection sensor (4);
(f) an analog-output-type photoelectric sensor (5) for detecting changes in the surface form of the liquid, the sensor (5) being mounted on the sensor mounting (7); and
(g) data processing means (11) for recording a lapse of time from the beginning of the rotation of the container holder (2) and the corresponding magnitude of the output of the analog-output-type photoelectric sensor (5), the data processing means (11) being connected to the rotating means (3) and to the sensor (5).

4. Apparatus as claimed in claim 3, in which the axes of the sensors (4,5) are mutually orthogonal.

## Patentansprüche

1. Verfahren zur Prüfung von lichtdurchlässigen, geschlossenen Behältern (1), die teilweise mit einer Flüssigkeit gefüllt sind, um zu ermitteln, ob eine nicht zu akzeptierende Veränderung der Viskosität der Flüssigkeit zu verzeichnen ist, wobei das Verfahren die folgenden Schritte aufweist:
(a) Anordnen eines ersten Behälters (1) auf einem drehbaren Halter (2) für den Behälter, wobei der Behälter (1) teilweise mit einer Flüssigkeit in ihrem normalen Zustand gefüllt ist;
(b) Einstellen der Höhe eines fotoelektrischen Meßfühlers (5) mit Analogausgang relativ zum Füllstand (13) der Flüssigkeit durch Ermitteln des Füllstandes (13) der Flüssigkeit mittels eines fotoelektrischen Meßfühlers (4) für den Nachweis des Füllstandes;
(c) Drehen des Halters (2) für den Behälter um eine vertikale Achse und dadurch Anwenden einer Zentrifugalkraft auf die Flüssigkeit im Behälter (1), um zu bewirken, daß sich die Oberflächenform der Flüssigkeit in eine nach innen gewölbte Form (13a) verändert;
(d) Registrieren des zeitlichen Ablaufs ab Beginn der Drehung des Halters (2) für den Behälter und der entsprechenden Größe des Ausganges des fotoelektrischen Meßfühlers (5) mit Analogausgang während der Veränderung der Oberflächenform der Flüssigkeit als entsprechende Bezugswerte;
(e) Wiederholen der Schritte (a) bis (d) für weitere einzelne Behälter (1), die teilweise mit der Flüssigkeit gefüllt sind;
(f) Ermitteln, ob eine Differenz zwischen dem tatsächlichen Wert der Größe des Ausganges und dem Bezugswert der Größe mit Bezugnahme auf den zeitlichen Ablauf oder eine Differenz zwischen dem tatsächlichen Wert des zeitlichen Ablaufs und dem Bezugswert des zeitlichen Ablaufs zu verzeichnen ist, wenn der Bezugswert der Größe des Ausganges erreicht ist; und
(g) Ermitteln aus der Differenz (den Differenzen), wenn vorhanden, ob eine nicht zu akzeptierende Veränderung der Viskosität des flüssigen Inhaltes der weiteren Behälter zu verzeichnen ist.

2. Verfahren nach Anspruch 1, bei dem der Halter (2) für den Behälter mit einer Drehzahl von 300 bis 1500 U/min. gedreht wird.

3. Vorrichtung für das Durchführen des Verfahrens nach Anspruch 1, wobei die Vorrichtung aufweist:
(a) einen drehbaren Halter (2) für den Behälter;
(b) eine Einrichtung (3) für das Drehen des Halters (2) für den Behälter um eine vertikale Achse;
(c) eine Meßfühlerhalterung (7), die vertikal relativ zum Halter (2) für den Behälter beweglich ist, und die sich um den Halter (2) für den Behälter herum erstreckt;
(d) einen fotoelektrischen Meßfühler (4) für den Nachweis des Füllstandes, um den Füllstand (13) der Flüssigkeit in einem Behälter (1) zu ermitteln, wenn er im Halter (2) für den Behälter angeordnet ist, wobei der Meßfühler (4) in der Meßfühlerhalterung (7) angeordnet ist;
(e) eine Einrichtung (8, 9) für das Einstellen der Höhe der Meßfühlerhalterung (7) relativ zum Füllstand (13) als Funktion des Ausganges des Meßfühlers (4) für den Nachweis des Füllstandes;
(f) einen fotoelektrischen Meßfühler (5) mit Analogausgang für das Nachweisen von Veränderungen der Oberflächenform der Flüssigkeit, wobei der Meßfühler (5) in der Meßfühlerhalterung (7) angeordnet ist; und
(g) eine Einrichtung (11) für die Datenverarbeitung, um den zeitlichen Ablauf ab Beginn der Drehung des Halters (2) für den Behälter und die entsprechende Größe des Ausganges des fotoelektrischen Meßfühlers (5) mit Analogausgang zu registrieren, wobei die Einrichtung (11) für die Datenverarbeitung mit der Einrichtung (3) für das Drehen und mit dem Meßfühler (5) verbunden ist.

4. Vorrichtung nach Anspruch 3, bei der die Achsen der Meßfühler (4, 5) gegenseitig orthogonal sind.

## Revendications

1. Procédé de contrôle de récipients fermés perméables à la lumière (1) partiellement remplis d'un liquide, pour déterminer l'existence d'une quelconque altération inacceptable de la viscosité du liquide, le procédé comprenant les étapes ci-dessous:
(a) mise en place d'un premier récipient (1) sur un support de récipient rotatif (2), le récipient (1) étant partiellement rempli d'un liquide dans son état normal;
(b) ajustement du niveau d'un capteur photoélectrique du type à sortie analogique (5) par rapport au niveau de la surface du liquide (13) par détection du niveau de surface (13) du liquide par l'intermédiaire d'un capteur photoélectrique de détection du niveau (4);
(c) mise en rotation du support du récipient (2) autour d'un axe vertical pour appliquer ainsi une force centrifuge au liquide dans le récipient (1), de sorte à faire prendre à la surface du liquide une forme incurvée (13a);
(d) enregistrement d'un laps de temps écoulé entre le début de la rotation du support du récipient (2) et la valeur correspondante de la sortie du capteur photoélectrique du type à sortie analogique (5) au cours du changement de la forme de la surface du liquide, comme valeurs de référence respectives;
(e) répétition des étapes (a) à (d) pour d'autres récipients individuels (1) partiellement remplis du liquide;
(f) détermination de l'existence d'une différence entre la valeur effective de la valeur de ladite sortie et la valeur de référence, pendant le laps de temps de référence, ou d'une différence entre la valeur effective du laps de temps et la valeur de référence du laps de temps, lors de l'atteinte de la valeur de référence de ladite sortie; et
(g) détermination sur la base de ladite (lesdites) différence(s), le cas échéant, l'existence d'une quelconque altération inacceptable de la viscosité du liquide contenu dans lesdits autres récipients.

2. Procédé selon la revendication 1, dans lequel le support du récipient (2) est mis en rotation à une vitesse comprise entre 300 et 1500 tpm.

3. Dispositif pour exécuter un procédé selon la revendication 1, le dispositif comprenant:
(a) un support rotatif du récipient (2);
(b) un moyen (3) pour mettre en rotation le support du récipient (2) autour d'un axe vertical;
(c) une plaque de montage du capteur (7) pouvant être déplacée verticalement par rapport au support du récipient (2) et s'étendant autour du support du récipient (2);
(d) un capteur photoélectrique de détection du niveau (4) pour détecter le niveau de surface (13) du liquide dans un récipient (1), placé sur le support du récipient (2), le capteur (4) étant monté sur la plaque de montage du capteur (7);
(e) un moyen (8, 9) pour ajuster le niveau de la plaque de montage du capteur (7) par rapport audit niveau de surface (13) comme fonction de la sortie du capteur de détection du niveau (4);
(f) un capteur photoélectrique du type à sortie analogique (5) pour détecter des changements de la forme de la surface du liquide, le capteur (5) étant monté sur la plaque de montage du capteur (7); et
(g) un moyen de traitement des données (11) pour enregistrer un laps de temps écoulé à partir du début de la rotation du support du récipient (2) et la valeur correspondante de la sortie du capteur photoélectrique du type à sortie analogique (5), le moyen de traitement des données (11) étant connecté au moyen de rotation (3) et au capteur (5).

4. Dispositif selon la revendication 3, dans lequel les axes des capteurs (4, 5) sont mutuellement orthogonaux.
